# FASCICULE DE BREVET EUROPEEN

(11) **EP 2 715 917 B1**
(45) Date de publication et mention de la délivrance du brevet: **22.02.2017**
(21) Numéro de dépôt: 12731167.8
(22) Date de dépôt: 31.05.2012
(51) Int. Cl.: H02K 1/27, H02K 1/28

(54) **ROTOR A AIMANTS PERMANENTS ET MACHINE TOURNANTE COMPORTANT UN TEL ROTOR**
PERMANENTMAGNETROTOR UND DREHMASCHINE MIT EINEM SOLCHEN ROTOR
PERMANENT-MAGNET ROTOR AND ROTATING MACHINE COMPRISING SUCH A ROTOR

(30) Priorité: 31.05.2011 FR 1154765
(43) Date de publication de la demande: 09.04.2014
(73) Titulaire: Moteurs Leroy-Somer, 16000 Angouleme (FR)
(72) Inventeur: GILLES, Christophe, F-16730 Fleac (FR); BEYNAUD, Pascal, F-16290 Saint-saturnin (FR); GAUTHIER, Pascal, F-16290 Asnieres-sur-nouere (FR); SAINT-MICHEL, Jacques, F-16000 Angouleme (FR); SAVINOIS, Olivier, F-16000 Angouleme (FR)
(74) Mandataire: Nony
(86) Numéro de dépôt international: PCT/IB2012/052741
(87) Numéro de publication internationale: WO 2012/164519

(56) Documents cités:
- EP-A1- 0 430 795
- EP-A1- 1 796 248
- WO-A1-89/04078
- DE-A1-102009 026 524
- DE-A1-102009 045 101
- US-A1- 2007 252 469

## Description

La présente invention concerne les machines tournantes électriques, notamment les moteurs synchrones, et plus particulièrement les machines comportant un rotor à aimants permanents à concentration de flux.

Les rotors à concentration de flux comportent une carcasse rotorique, encore appelée masse rotorique, dans laquelle sont logés des aimants, ces derniers étant engagés dans des logements orientés radialement.

On connaît plusieurs types de rotors à concentration de flux.

Il existe notamment des rotors comportant un moyeu amagnétique sur lequel sont rapportés des pièces polaires entre lesquelles sont insérés les aimants permanents, comme décrit par exemple dans la demande EP 1 152 516.

La demande de brevet DE 10 2009 026 524 porte sur une machine électrique avec un rotor comportant des pièces polaires reliées par l'intermédiaire d'un collier de fixation et de ponts de connexion. Ces ponts définissent des évidements et des logements pour recevoir des aimants magnétiques permanents, les logements débouchant sur la surface extérieure du rotor.

La demande de brevet EP 0 430 795 a pour objet un rotor de moteur à aimants formés de tôles magnétiques et d'aimants qui sont solidarisés à l'aide d'un profilé à épaisseur constante constitué de lobes et de portions courbes. Les logements destinés à recevoir les aimants débouchent sur l'extérieur du rotor, ce qui peut réduire ainsi la résistance mécanique du rotor.

La demande de brevet US 2003/137203 porte sur des tôles de rotor dans lesquelles sont logés des aimants maintenus dans les logements par des nervures élastiques.

La demande de brevet US 2009/0096308 a pour objet un moteur électrique comportant des évidements et des aimants permanents maintenus par des épanouissements polaires et des nervures du rotor.

US 2007/0252469 a pour objet une machine électrique dans laquelle le rotor comporte des reliefs venus de formation avec la tôle correspondante.

EP 1 796 248 porte sur un procédé de fabrication d'un rotor dans lequel le rotor comporte une structure interne de rotor radialement expansible de manière irréversible, entourée d'une enveloppe.

DE 10 2009 045 101 a pour objet une machine électrique dépourvue d'éléments de blocage insérés.

On connaît également des rotors comportant un assemblage de tôles rotoriques, chaque tôle rotorique étant monobloc et comportant des logements dans lesquels les aimants permanents sont disposés.

En outre, il existe des rotors comportant des logements adaptés à recevoir des aimants de forme trapézoïdale en section, comme décrit par exemple dans la demande EP 1 249 919. Les pièces polaires sont reliées au moyeu du rotor par des ponts de matière, notamment par deux ponts de matière au pied de chaque aimant de part et d'autre de celui-ci, et les aimants sont bloqués entre les pièces polaires par centrifugation.

Par ailleurs, on connaît également des rotors comportant des tôles rotoriques munies d'évidements pour réduire les pertes de flux magnétique, comme décrit par exemple dans le brevet US 7 772 735.

Les solutions connues de l'art antérieur présentent certains inconvénients.

L'utilisation d'acier amagnétique ou d'aluminium pour réaliser le moyeu ou l'arbre est relativement coûteuse.

Une forme rectangulaire d'aimants permanents complique le positionnement et le contact adéquat entre la tôle rotorique et les aimants. Le mauvais placement des aimants occasionne le plus souvent des entrefers parasites qui réduisent les performances du rotor et qui contraignent à effectuer des ajustements très précis.

Enfin, la présence de ponts de matière au pied des aimants permanents a un impact négatif sur la puissance massique du moteur et le calage des aimants entre les pièces polaires n'est pas nécessairement optimal.

Il existe un besoin pour perfectionner encore les rotors à concentration de flux, notamment afin de réduire leur coût de fabrication tout en bénéficiant de performances électriques et mécaniques satisfaisantes.

La présente invention vise à répondre à ce besoin tout en remédiant à tout ou partie des inconvénients mentionnés ci-dessus.

L'invention a ainsi pour objet, selon l'un de ses aspects, un rotor de machine électrique tournante à aimants permanents et à concentration de flux, comportant une carcasse rotorique présentant des logements orientés radialement dans lesquels les aimants permanents sont disposés, chaque logement débouchant à son extrémité radialement intérieure sur un évidement s'étendant de part et d'autre d'un plan médian M du logement, un élément de blocage étant inséré entre le fond de l'évidement et l'aimant permanent disposé dans le logement.

La carcasse rotorique peut être formée par un assemblage de tôles rotoriques, chacune étant monobloc. Chaque logement peut ne pas déboucher sur l'extérieur de la tôle rotorique, c'est-à-dire sur la surface radialement extérieure.

L'invention a aussi pour objet, selon un autre de ses aspects, un rotor à aimants permanents à concentration de flux, comportant une carcasse rotorique présentant des logements orientés radialement dans lesquels les aimants permanents sont disposés, chaque logement présentant une largeur sur au moins une portion en contact avec l'aimant qui diminue en éloignement de l'axe du rotor, chaque logement débouchant à son extrémité radialement intérieure sur un évidement s'étendant de part et d'autre d'un plan médian du logement.

Le rotor peut comporter un support rotatif, tel qu'un arbre s'étendant selon l'axe de rotation du rotor.

La carcasse rotorique peut présenter une ouverture centrale pour le passage de l'arbre. Le rotor peut être monté en porte-à-faux ou non.

Le rotor peut comporter ou non au moins un élément de blocage d'un aimant permanent dans son logement.

L'élément de blocage peut maintenir l'aimant permanent en position dans son logement en étant inséré entre l'extrémité radialement intérieure de l'aimant et le fond de l'évidement.

Grâce à l'invention, les logements peuvent loger des aimants non rectangulaires, de préférence trapézoïdaux en section, et obtenir par effet de coincement un bon contact entre les aimants et la carcasse. De la sorte, il est possible de réduire les pertes magnétiques et les dispersions dans les performances d'une machine comportant un rotor selon l'invention.

La mise en place des aimants permanents est facilitée grâce à la possibilité d'avoir un jeu relativement important entre les aimants et la carcasse lors de l'introduction des aimants. Cette introduction peut se faire notamment sans contact avec les tôles rotoriques par un outillage amagnétique, retiré avant le positionnement final des aimants.

La carcasse est de préférence formée par un assemblage de tôles rotoriques assemblées les unes sur les autres selon l'axe de rotation. La carcasse peut comporter au moins une tôle rotorique enroulée sur elle-même selon l'axe de rotation. Chacune des tôles rotoriques peut notamment être monobloc. Ainsi, le rotor est dépourvu de pièces polaires rapportées.

L'invention peut permettre d'éviter le recours à des pièces amagnétiques telles qu'un moyeu ou un arbre amagnétique, de coût relativement élevé. Le support rotatif du rotor, notamment sous forme d'arbre, peut ainsi être réalisé dans un matériau magnétique.

Chaque tôle rotorique est par exemple découpée dans une feuille d'acier magnétique. Les tôles peuvent être revêtues d'un vernis isolant électrique sur leurs faces opposées avant leur assemblage au sein du paquet. L'isolation électrique peut encore être obtenue par un traitement thermique des tôles.

La répartition des évidements et des logements est avantageusement régulière et de symétrie axiale, facilitant la découpe de la tôle rotorique et sa stabilité après découpe quand la carcasse rotorique est constituée d'une superposition de tôles rotoriques.

Le plan médian d'un logement correspond dans les exemples préférés de mise en oeuvre de l'invention au plan passant par l'axe de plus grande dimension du logement.

Chaque évidement peut présenter deux branches qui s'étendent respectivement de part et d'autre du logement, de préférence en divergeant en éloignement de l'axe du rotor. Les évidements sont alors orientés de manière non radiale.

Chaque évidement peut encore être dépourvu de branches s'étendant respectivement de part et d'autre du logement. Chaque évidement peut par exemple avoir une forme sensiblement trapézoïdale, présentant notamment deux bords opposés qui s'étendent respectivement de part et d'autre du plan médian du logement en divergeant en éloignement de l'axe du rotor. La distance d'un point d'un bord du logement à l'axe du rotor peut être supérieure ou égale à la distance d'un point d'un bord de chaque évidement à l'axe du rotor.

Les évidements adjacents de deux logements consécutifs peuvent être séparés par un pont de matière d'une largeur fonction du diamètre du rotor, par exemple une largeur inférieure de 50 à 60 fois le diamètre du rotor, par exemple inférieure ou égale à 3 mm pour un rotor de diamètre compris entre 100 et 200 mm, par exemple de 2,5 mm pour un rotor de diamètre égal à 140 mm. La faible largeur de tôle séparant les évidements adjacents associés à deux logements consécutifs peut permettre d'obtenir un gain important de puissance massique, notamment en comparaison avec des rotors présentant des ponts de matière au pied des aimants permanents.

Au moins une ouverture peut être formée entre deux évidements adjacents associés à deux logements consécutifs, notamment plusieurs ouvertures circulaires espacées dans la direction radiale et situées chacune entre les deux évidements. L'ouverture peut définir au moins deux ponts de matière entre les évidements adjacents, situés de part et d'autre de l'ouverture. L'ouverture peut s'étendre radialement, ayant notamment une forme allongée radialement, soit continûment, soit sous la forme de perçages, circulaires par exemple, régulièrement espacés.

Les logements peuvent être tels que la plus grande dimension radiale du logement est supérieure à la plus grande dimension circonférentielle du logement (mesurée entre deux points à une même distance du centre, le long d'un segment passant par ces points et perpendiculaire à un rayon bissecteur pour ces points).

Les évidements peuvent créer des zones de restriction du flux entre les aimants permanents, où le flux magnétique ne peut circuler aisément vers l'arbre car la tôle est à saturation magnétique, et de ce fait limitent le bouclage du flux magnétique vers la partie radialement intérieure du rotor.

Les évidements peuvent être séparés de l'ouverture centrale par une portion de tôle sensiblement annulaire. Une telle portion sensiblement annulaire contribue à la solidité du rotor. La dimension radiale de cette portion annulaire séparant les évidements de l'ouverture centrale peut être supérieure ou égale à la dimension radiale de la portion de tôle séparant les logements de la périphérie externe de la carcasse.

L'invention permet de répartir les efforts des forces centrifuges sur la partie radialement intérieure de la carcasse rotorique.

Le nombre de logements et d'aimants dépend de la polarité du rotor. La carcasse rotorique peut comporter un nombre quelconque de paires de logements, par exemple six ou huit logements.

Les évidements ont avantageusement une dimension radiale, le long du plan médian du logement, inférieure ou égale à celle des logements, afin de ne pas réduire outre mesure la concentration du flux des aimants. La dimension radiale d'un évidement, le long du plan médian du logement, est par exemple d'environ la moitié de celle du logement.

Les logements ont de préférence une dimension radiale supérieure ou égale à celle des aimants permanents reçus à l'intérieur de ces logements.

La carcasse rotorique peut présenter un contour extérieur qui est circulaire ou multilobé, une forme multilobée pouvant être utile par exemple pour réduire les ondulations de couple ou les harmoniques de courant ou de tension.

Les logements peuvent ou non déboucher sur la surface radialement extérieure de la carcasse rotorique.

Les logements peuvent ou non déboucher sur l'extérieur de la tôle rotorique. Les logements peuvent notamment être séparés de la périphérie de la tôle rotorique par un pont de matière formé avec la tôle, d'une largeur comprise notamment entre 0,1 et 3 mm, conférant au logement une résistance mécanique suffisante.

Chaque logement et évidement dans lequel il débouche peut former un ajour occupant un intervalle angulaire compris entre 30° et 50°, par exemple sensiblement égal à 45°, autour de l'axe du rotor.

Les aimants permanents peuvent avoir en section une forme trapézoïdale.

L'évidement peut comporter des branches ayant des bords se rejoignant grâce à un arrondi, pourvu notamment d'une encoche circulaire de plus faible rayon de courbure. L'encoche circulaire peut permettre le positionnement de l'élément de blocage. L'évidement peut présenter toute encoche de forme adaptée au positionnement de l'élément de blocage, par exemple une encoche à fond plat.

L'ouverture centrale peut comporter un moyen d'anti-rotation, notamment une saillie d'anti-rotation engagée dans une rainure correspondante de l'arbre. En variante, un autre moyen d'anti-rotation peut être utilisé, par exemple du type frettage.

L'élément de blocage, lorsque présent, peut avoir une forme générale de goupille cylindrique, pourvue notamment d'un cône d'introduction à une extrémité. L'élément de blocage peut être creux ou plein. L'élément de blocage peut être d'une seule pièce ou formé par l'assemblage d'au moins deux pièces, notamment chacune en forme de cône, disposées tête-bêche et munies sur leur faces en contact de reliefs d'accrochage, notamment de crans, de telle sorte que le déplacement d'une pièce par rapport à l'autre soit unidirectionnel, dans une direction conduisant à une augmentation du serrage.

L'élément de blocage peut être élastiquement déformable, étant de préférence réalisé dans une matière thermoplastique, dont la tenue en température et l'élasticité sont compatibles avec leur application. Le jeu négatif entre l'aimant et l'élément de blocage peut être supérieur ou égal en valeur absolue à 0. La valeur du jeu négatif peut notamment être fonction du diamètre du rotor, de l'échauffement, de la vitesse ou de toute autre contrainte appliquée au rotor.

L'élément de blocage peut présenter une longueur qui est fonction de la longueur des aimants et par exemple égale à la longueur des aimants à plus ou moins 20%.

L'élément de blocage peut présenter un diamètre (ou plus grande dimension transversale au repos) qui est fonction du diamètre du rotor, par exemple compris entre 15 et 25 mm pour un rotor de diamètre supérieur ou égal à 100 mm.

L'élément de blocage peut être disposé de façon symétrique par rapport au plan médian du logement, entre les branches de l'évidement.

L'élément de blocage peut avoir, en section transversale, une forme sensiblement en sablier. L'élément de blocage peut comporter, en section transversale, deux parois plus épaisses et deux parois plus minces, les parois plus minces reliant les parois plus épaisses et étant incurvées vers l'extérieur de façon à définir un rétrécissement. L'élément de blocage peut présenter une ou plusieurs zones de déformation préférentielle, par exemple sous forme d'une ou plusieurs lignes de pliage s'étendant longitudinalement.

Le rotor peut comporter un seul élément de blocage, ou plusieurs, ou encore autant d'éléments de blocage que de logements. En particulier, le rotor peut comporter au moins 6 ou 8 éléments de blocage, selon sa polarité.

Un même élément de blocage peut traverser une pluralité de tôles rotoriques, notamment toutes les tôles rotoriques du rotor.

L'élément de blocage peut être fendu ou non, étant de préférence non fendu.

L'élément de blocage peut être disposé entre un aimant permanent et le moyeu du rotor, permettant la mise en position et le maintien de l'aimant permanent dans le logement correspondant sans nécessiter l'utilisation de la force centrifuge.

L'élément de blocage peut être ou non amagnétique, étant de préférence amagnétique.

L'élément de blocage peut être réalisé en toutes matières thermoplastiques, par exemple en polyoléfine, polyamide, entre autres.

Le rotor peut comporter un support rotatif, notamment un arbre s'étendant selon l'axe de rotation du rotor, la carcasse rotorique du rotor étant fixée par exemple en porte-à-faux au support rotatif. En particulier, la carcasse rotorique peut comporter une ouverture centrale et le support rotatif peut être un arbre. La carcasse rotorique peut être fixée à l'arbre sans qu'il ne traverse l'ouverture centrale. La carcasse rotorique du rotor peut être fixée au support rotatif au moyen de vis de serrage fixées sur une collerette en bout du support rotatif. La carcasse rotorique peut être serrée entre des flasques. Les vis peuvent prendre appui à une extrémité sur l'un des flasques. Ces derniers peuvent présenter une forme annulaire et être dans un matériau amagnétique.

Les vis de serrage peuvent traverser la carcasse rotorique en étant engagées à l'intérieur d'éléments de blocage.

L'invention a encore pour objet, selon un autre de ses aspects, un rotor de machine électrique tournante à aimants permanents et à concentration de flux, comportant une carcasse rotorique présentant des logements orientés radialement dans lesquels les aimants permanents sont disposés, chaque logement débouchant à son extrémité radialement intérieure sur un évidement s'étendant de part et d'autre d'un plan médian du logement, un élément de blocage étant inséré entre le fond de l'évidement et l'aimant permanent disposé dans le logement.

Chaque logement peut présenter une largeur sur au moins une portion en contact avec l'aimant qui diminue en éloignement de l'axe du rotor.

L'invention a encore pour objet une machine tournante électrique, telle qu'un moteur synchrone ou une génératrice, comportant un rotor tel que défini précédemment.

Cette machine peut comporter un stator avec tout type de bobinage, par exemple à bobinage concentré ou réparti.

L'invention a encore pour objet, selon un autre de ses aspects, un procédé de fabrication d'un rotor tel que défini ci-dessus, les aimants étant mis en place avec jeu dans les logements correspondants et les éléments de blocage étant insérés à force dans les évidements, s'interposant entre les aimants permanents et le bord des évidements, de façon à maintenir sans jeu les aimants permanents dans les logements.

Au moins un flasque peut être rapporté sur la carcasse rotorique après mise en place des éléments de blocage.

Des vis de serrage peuvent être engagées à travers les éléments de blocage.

L'invention pourra être mieux comprise à la lecture de la description détaillée qui va suivre, d'exemples de réalisation non limitatifs de celle-ci, et à l'examen du dessin annexé, sur lequel :
- la figure 1 représente en coupe transversale, de manière schématique, un exemple de rotor réalisé conformément à l'invention,
- la figure 2 représente isolément et de face une tôle rotorique,
- les figures 3 et 4 représentent des détails de réalisation de tôle rotorique,
- la figure 5 représente, en perspective, le rotor de la figure 1,
- la figure 6 est une vue en coupe axiale de la figure 2,
- la figure 7 représente en coupe longitudinale un élément de blocage,
- la figure 8 représente, en perspective, l'élément de blocage de la figure 7,
- les figures 9 et 10, et les figures 11 et 12, représentent respectivement des variantes de réalisation des figures 1 et 6,
- la figure 13 représente, en perspective, l'élément de blocage du mode de réalisation des figures 11 et 12,
- les figures 14 et 15 représentent des variantes de réalisation de la tôle rotorique de la figure 2,
- la figure 16 est une vue en coupe et la figure 17 est une vue en perspective qui illustrent la possibilité de fixer la carcasse rotorique sur l'arbre sans avoir d'arbre traversant la carcasse rotorique,
- la figure 18 est une coupe de face selon XVIII-XVIII de la figure 17,
- la figure 19 représente en coupe transversale, de manière schématique, une variante de réalisation de l'invention,
- la figure 20 est une vue en perspective, schématique et partielle, de la machine permettant de fabriquer le rotor de la figure 19,

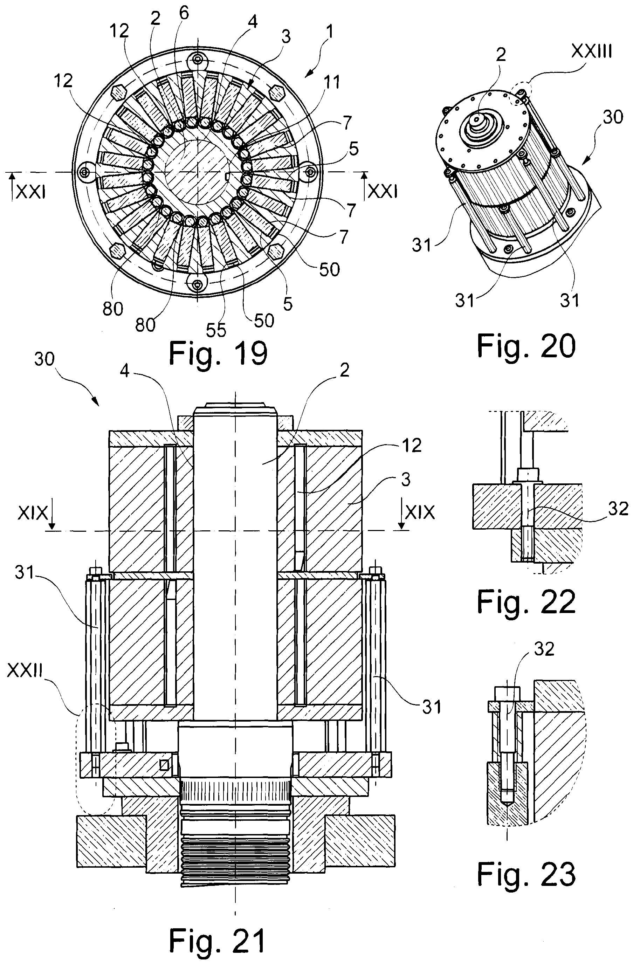

- la figure 20 est une coupe longitudinale de la machine de la figure 19,
- les figures 22 et 23 sont des coupes longitudinales des détails respectivement XXII et XXIII des figures 20 et 21,

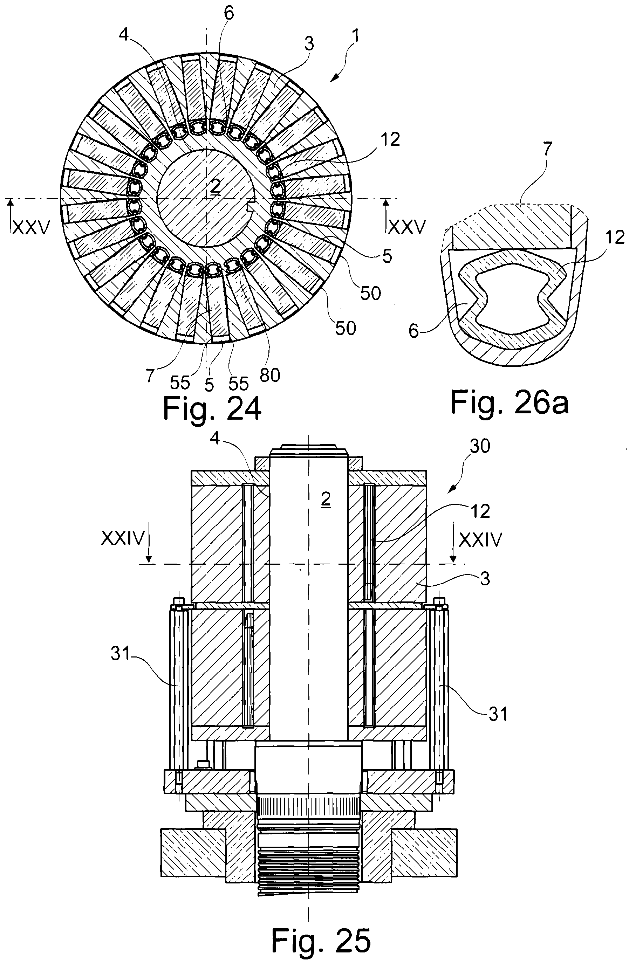

- la figure 24 représente en coupe transversale, de manière schématique, une variante de réalisation de l'invention,
- la figure 25 est une coupe longitudinale de la machine permettant de fabriquer le rotor de la figure 24,

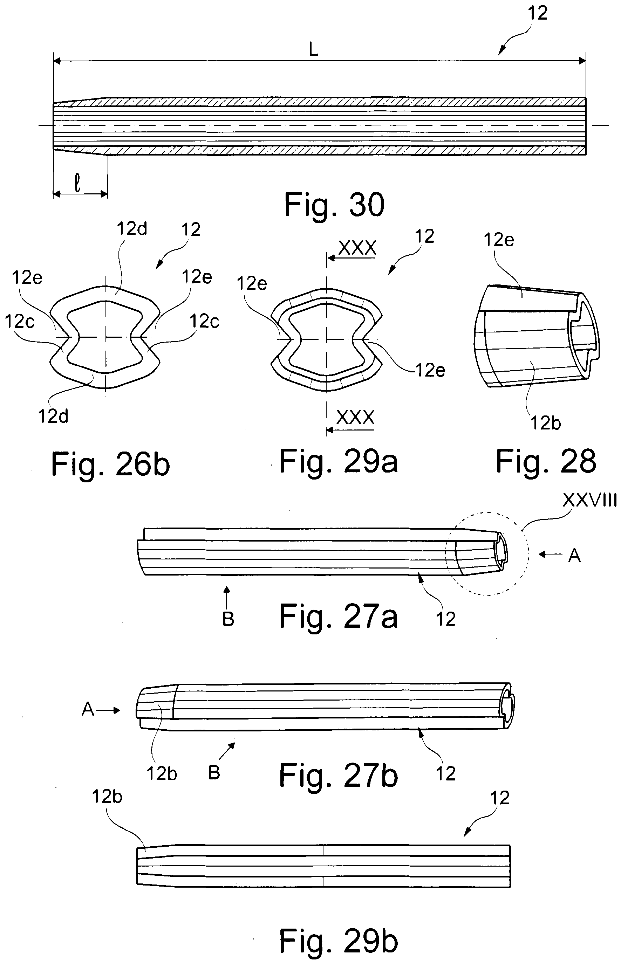

- les figure 26a et 26b sont des vues en coupes transversales de l'élément de blocage de la figure 24,
- les figures 27a et 27b en sont des vues en perspective,
- la figure 28 est une vue du détail XXVIII de la figure 27a,
- les figures 29a et 29b en sont des vues respectivement selon les flèches A et B,
- la figure 30 en est une coupe longitudinale selon XXX-XXX,

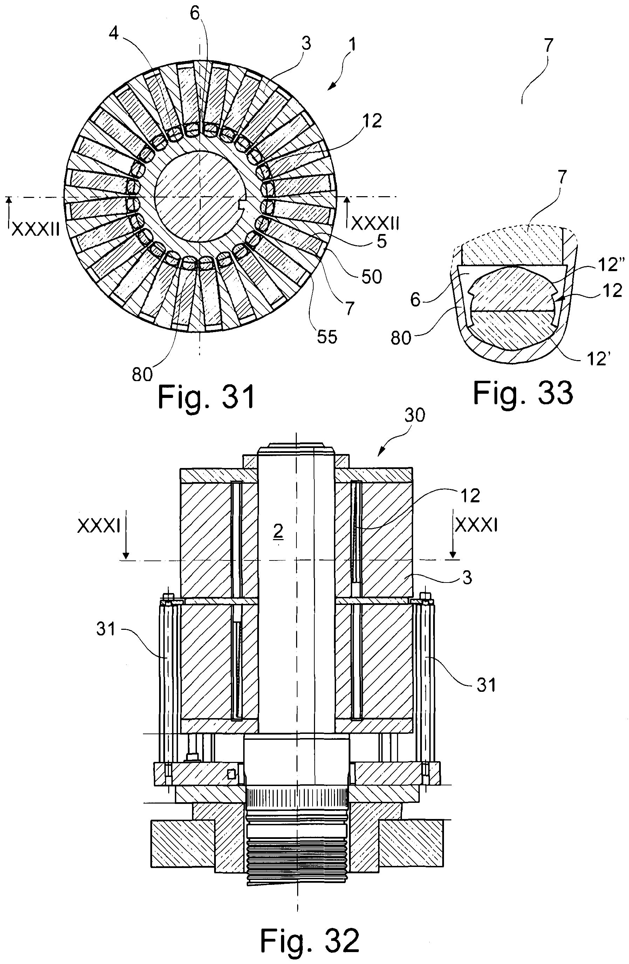

- la figure 31 représente en coupe transversale, de manière schématique, une variante de réalisation de l'invention,
- la figure 32 est une coupe longitudinale de la machine permettant de fabriquer le rotor de la figure 31,
- la figure 33 est une vue en coupe transversale de l'élément de blocage de la figure 31,

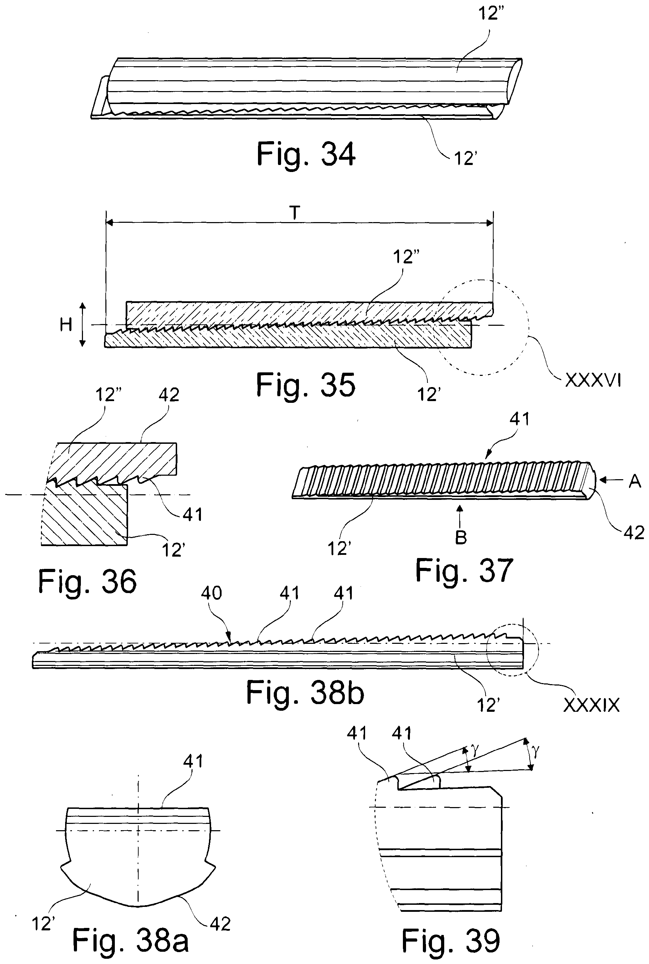

- la figure 34 en est une vue en perspective,
- la figure 35 en est une coupe longitudinale,
- la figure 36 est une vue du détail XXXVI de la figure 35,
- la figure 37 en est une vue en perspective,
- les figures 38a et 38b en sont des vues respectivement selon les flèches A et B,
- la figure 39 est une vue du détail XXXIX de la figure 38b,

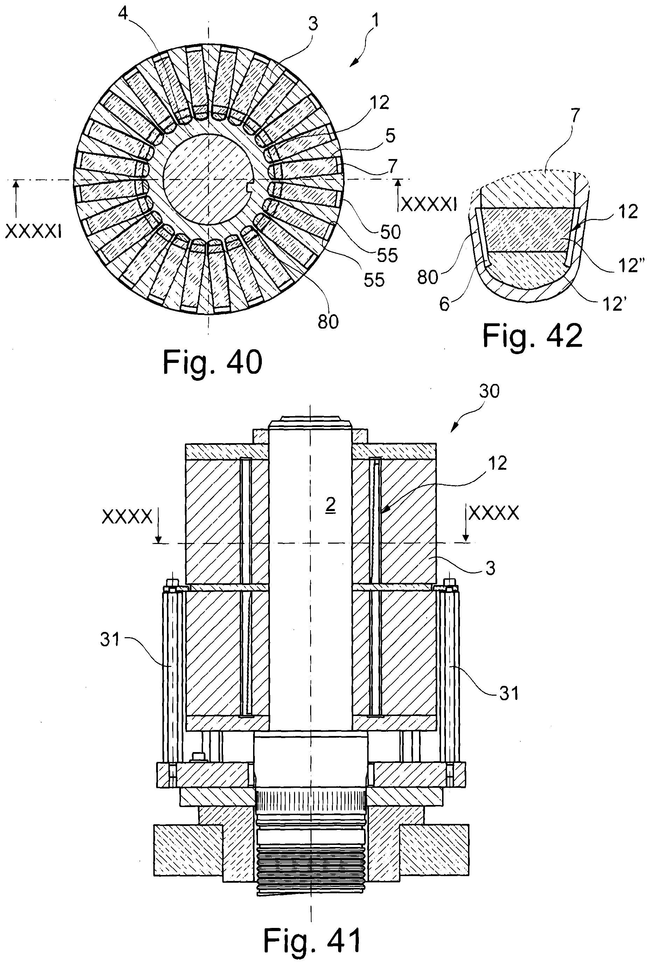

- la figure 40 représente en coupe transversale, de manière schématique, une variante de réalisation de l'invention,
- la figure 41 est une coupe longitudinale de la machine permettant de fabriquer le rotor de la figure 40,
- la figure 42 est une vue en coupe transversale de l'élément de blocage de la figure 40,

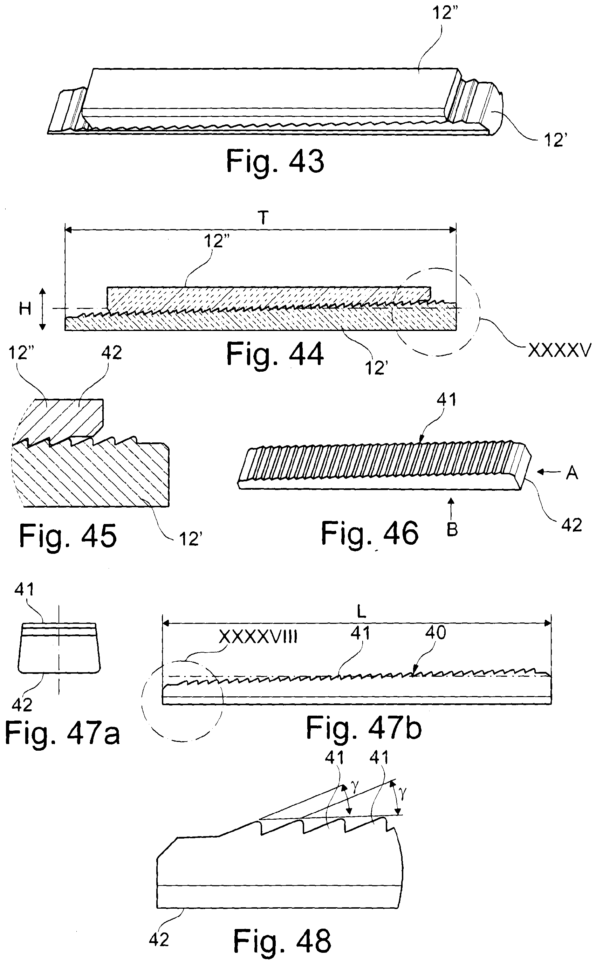

- la figure 43 en est une vue en perspective,
- la figure 44 en est une coupe longitudinale,
- la figure 45 est une vue du détail XXXXV de la figure 44,
- la figure 46 est une vue en perspective d'une partie de l'élément de blocage de la figure 40,
- les figures 47a et 47b en sont des vues respectivement selon les flèches A et B,
- la figure 48 est une vue du détail XXXXVIII de la figure 47b,

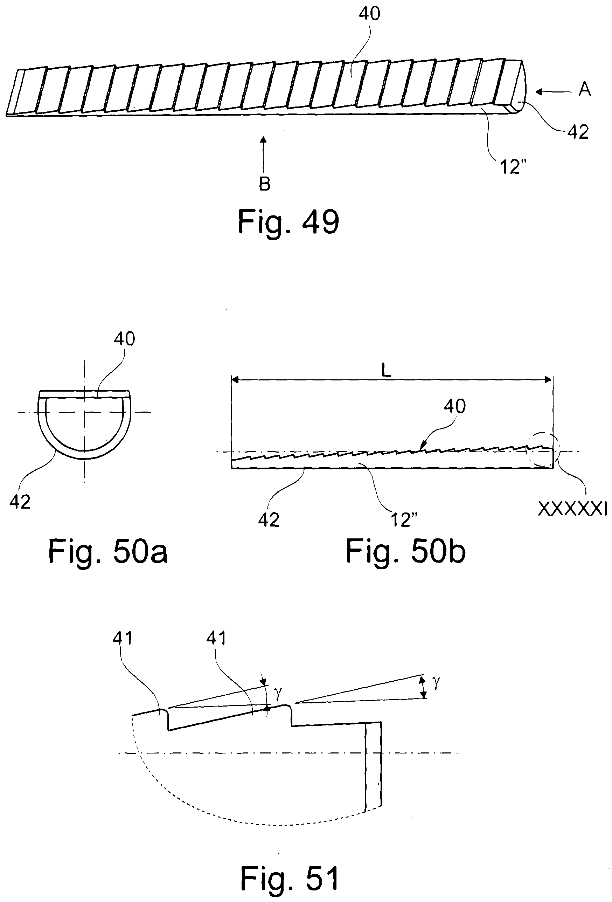

- la figure 49 est une vue en perspective d'une partie de l'élément de blocage de la figure 40,
- les figures 50a et 50b en sont des vues respectivement selon les flèches A et B, et
- la figure 51 est une vue du détail XXXXXI de la figure 50.

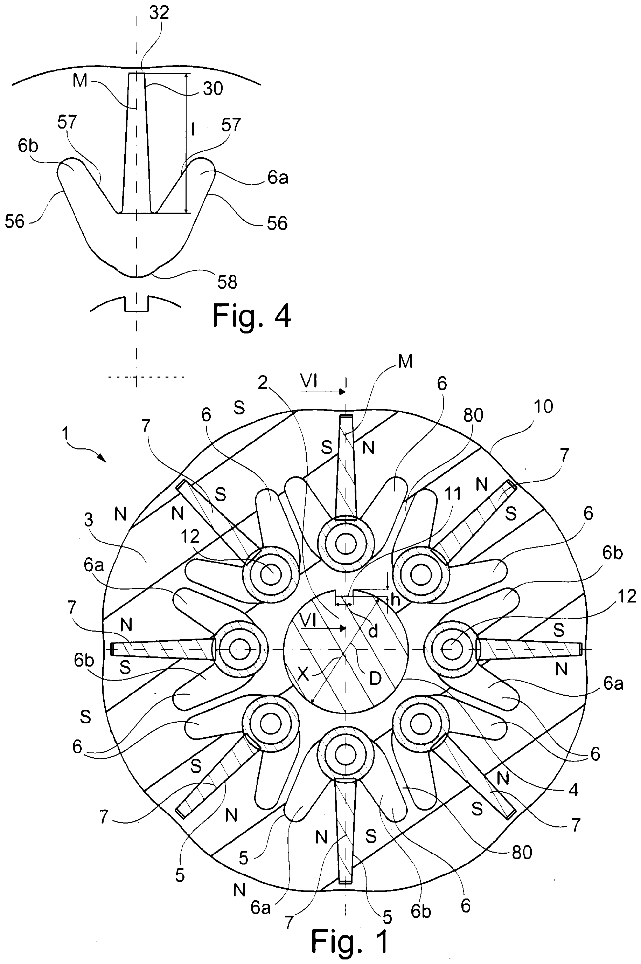

Le rotor 1 représenté à la figure 1 comporte une carcasse magnétique 3 s'étendant axialement selon l'axe de rotation X du rotor, cette carcasse étant de préférence formée par un paquet de tôles empilées selon l'axe X, les tôles étant dans l'exemple considéré identiques et superposées exactement.

Le rotor 1 comporte une pluralité d'aimants permanents 7 disposés dans des logements correspondants 5 de la carcasse magnétique rotorique 3, de manière à ce que deux aimants consécutifs 7 présentent des mêmes polarités sur leurs faces en regard.

La carcasse rotorique 3 est montée sur un support 2 qui, dans l'exemple considéré, est un arbre réalisé dans un matériau magnétique, par exemple de l'acier.

La carcasse rotorique 3 comporte une ouverture centrale 4 pour le montage sur l'arbre 2. L'ouverture centrale 4 présente par exemple un diamètre D compris entre 40 et 50 mm.

En outre, l'ouverture centrale 4 comporte une saillie 11 d'anti-rotation, engagée dans une rainure correspondante de l'arbre.

Le rotor 1 est disposé à l'intérieur d'un stator non représenté, qui comporte un bobinage qui peut être de tout type, par exemple un bobinage concentré ou réparti. Ce stator permet de générer un champ magnétique tournant d'entraînement du rotor, dans le cas d'un moteur synchrone, et dans le cas d'un alternateur, la rotation du rotor induit une force électromotrice dans les bobinages du stator.

La forme de la carcasse rotorique 3 à sa périphérie peut être multilobée comme représenté à la figure 1, chaque lobe 10 s'étendant entre deux aimants consécutifs 7 et étant convexe vers l'extérieur.

Les logements 5 sont séparés de la périphérie de la tôle rotorique par un pont de matière 50 formé avec la tôle, d'une largeur comprise par exemple entre 0,1 et 3 mm, conférant aux logements 5 une résistance mécanique suffisante.

Conformément à l'invention, chaque logement 5 débouche sur un évidement 6, s'étendant de part et d'autre du plan médian M du logement 5, pour limiter les pertes de flux magnétique par bouclage à travers le moyeu du rotor.

Chaque logement 5 présente, comme illustré à la figure 4, une dimension radiale / supérieure à celle de l'aimant correspondant.

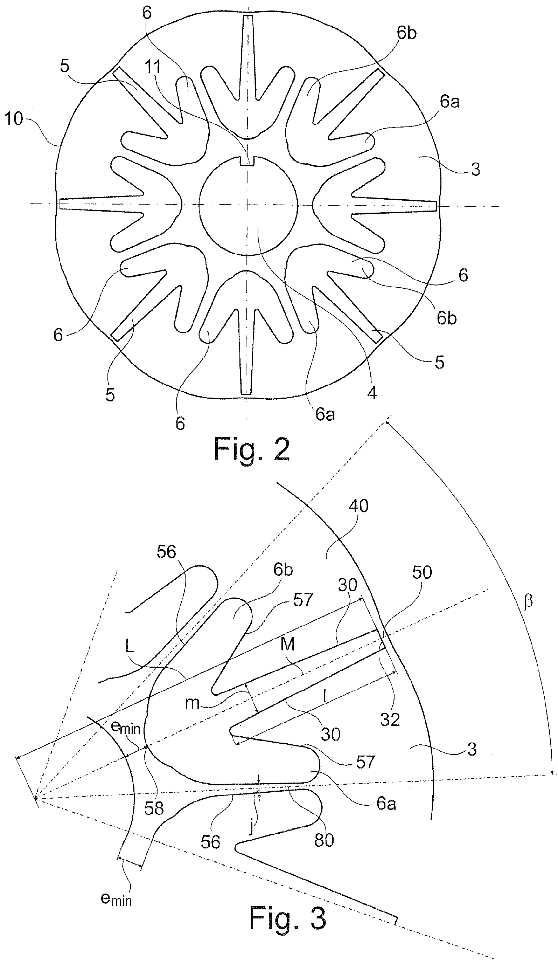

Conformément à l'invention, la section transversale de l'aimant 7 est trapézoïdale. Le logement 5 présente des bords longitudinaux opposés 30, notamment rectilignes, qui convergent l'un vers l'autre en éloignement de l'arbre 2. De plus, comme on peut le voir sur la figure 3, chaque logement 5 présente une largeur m sur au moins une portion en contact avec l'aimant 7 qui diminue en éloignement de l'axe X du rotor 1.

Les bords longitudinaux 30 peuvent se raccorder à un bord d'extrémité 32 qui est par exemple orienté perpendiculairement au plan médian M pour le logement 5, passant par l'axe de rotation X, et orienté radialement. De préférence, les aimants 7 ne viennent pas en butée radialement contre le bord d'extrémité 32, comme illustré.

L'extrémité radialement intérieure du logement 5 débouche sur l'évidement 6, lequel présente deux branches 6a et 6b s'étendant respectivement de part et d'autre du plan médian M du logement 5.

On définit l'étendue angulaire d'un secteur 40 comportant un logement 5 débouchant sur un évidement 6 comme étant l'angle ß entre les rayons bissecteurs entre deux évidements 6 adjacents, comme on peut le voir sur la figure 3. Dans cet exemple, les bords 56 les plus éloignés angulairement d'un évidement s'étendent parallèlement à ces rayons bissecteurs. L'angle ß peut par exemple être égal à environ 45°.

Les bords 56 se rejoignent grâce à un arrondi pourvu d'une encoche circulaire 58 de plus faible rayon de courbure.

La carcasse rotorique 3 comporte un moyeu qui s'étend continûment, ou en variante par secteurs, autour de l'axe de rotation X.

La dimension radiale minimale eₘᵢₙ de ce moyeu est par exemple d'au moins 2 mm, par exemple de 5 mm, pour un rotor de plus de 150 mm de diamètre, mais pourrait être beaucoup plus grande, ou moindre, voire nulle, en fonction des efforts centrifuges à tenir et de la taille du rotor.

La largeur *j* du pont de matière 80 s'étendant entre deux évidements 6 adjacents est par exemple comprise entre 0,5 et 15 mm, par exemple d'environ 1,5 mm dans l'exemple considéré. Le pont de matière 80 est à saturation du flux magnétique, ce qui limite son passage à travers lui.

Le rotor 1 comporte des éléments de blocage 12 contribuant au maintien des aimants 7 dans les logements 5.

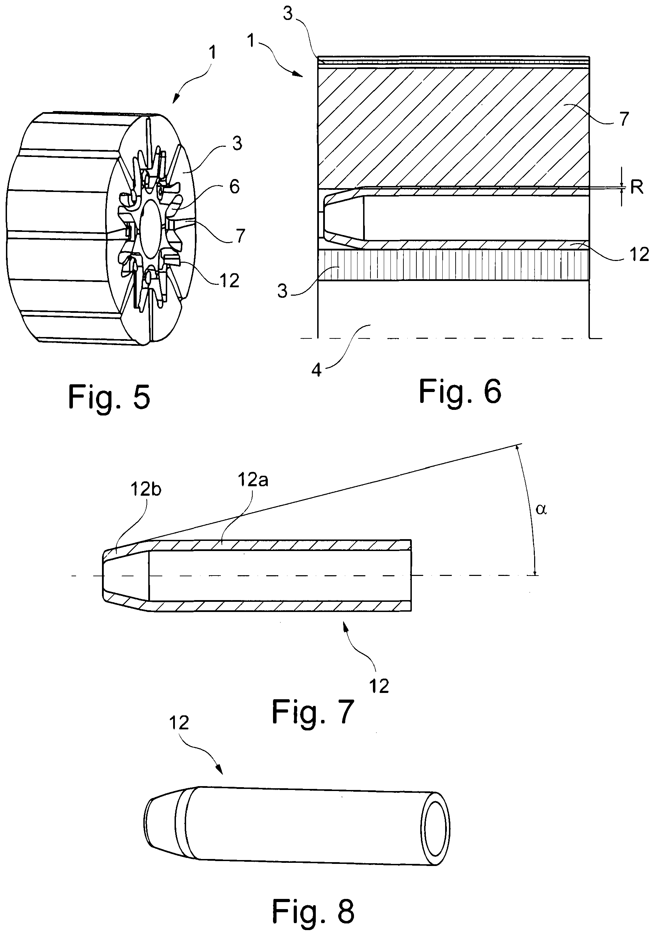

Comme on peut le voir sur la figure 7, chaque élément de blocage 12 se présente sous la forme d'une goupille comportant un corps 12a cylindrique de révolution et un cône d'introduction 12b d'angle au sommet de 15° par exemple à une extrémité.

Les éléments de blocage 12 sont par exemple réalisés en une matière thermoplastique élastiquement déformable.

Le jeu négatif radial R entre un aimant 7 et l'élément de blocage 12 correspondant est par exemple en valeur absolue supérieur ou égal à 0, étant fonction du diamètre du rotor, de l'échauffement, de la vitesse ou de tout autre contrainte appliquée au rotor.

L'encoche 58 épouse la courbure du corps 12a de l'élément de blocage 12.

Bien entendu, l'invention n'est pas limitée à l'exemple de réalisation qui vient d'être décrit.

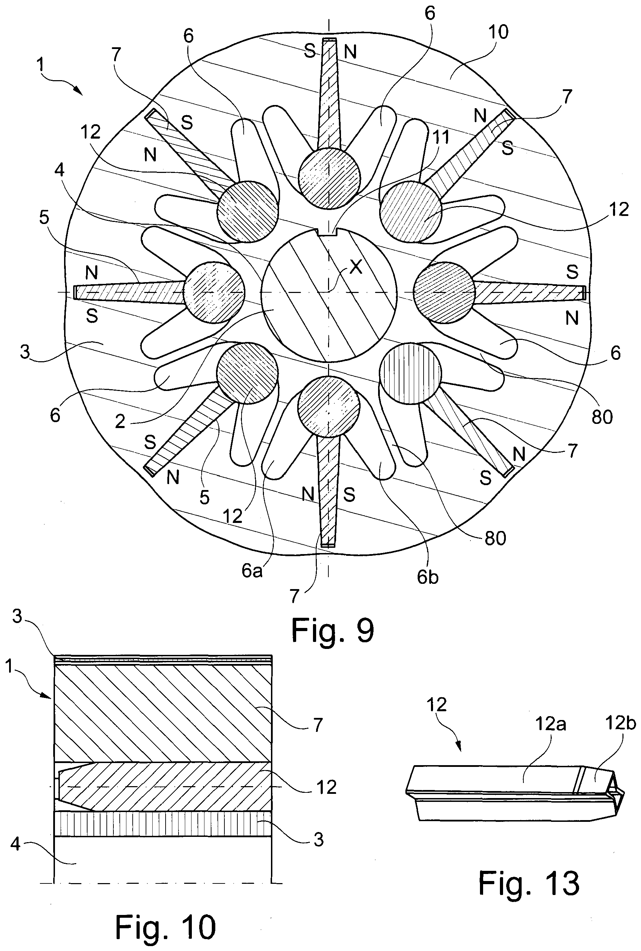

Les figures 9 et 10 illustrent la possibilité pour les éléments de blocage 12 d'être pleins, par exemple en étant de section circulaire.

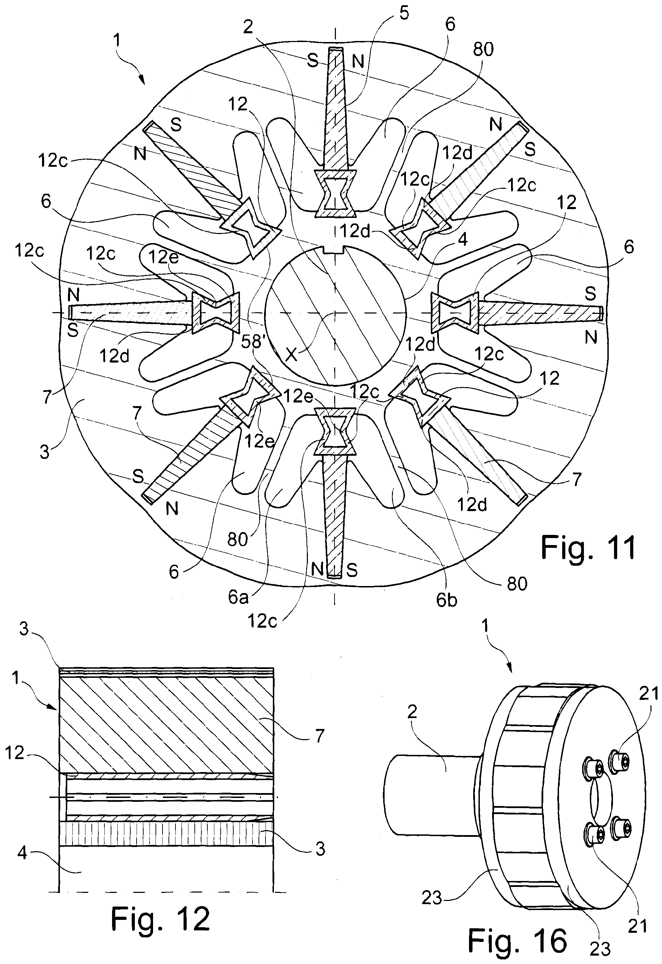

Les figures 11 à 13 illustrent une variante de réalisation de l'élément de blocage 12. L'élément de blocage 12 peut par exemple avoir, en section, une forme sensiblement en sablier (ou noeud papillon). L'élément de blocage 12 peut être creux, comme illustré, ou plein. L'élément de blocage 12 peut ou non être pourvu à une extrémité d'un rétrécissement d'introduction 12b, comme représenté sur la figure 12.

En section transversale, l'élément de blocage 12 peut comporter, comme illustré sur la figure 11, deux parois plus épaisses 12d et deux parois plus minces 12c qui relient les parois 12d et sont incurvées l'une vers l'autre de façon à définir un rétrécissement 12e de section à mi-hauteur environ. De part sa forme, l'élément de blocage 12 peut se déformer élastiquement avec rapprochement des parois 12d, les parois minces 12c définissant des lignes de pliage préférentielles. Le fond de l'évidement 6 peut présenter une encoche de positionnement 58' de l'élément de blocage 12.

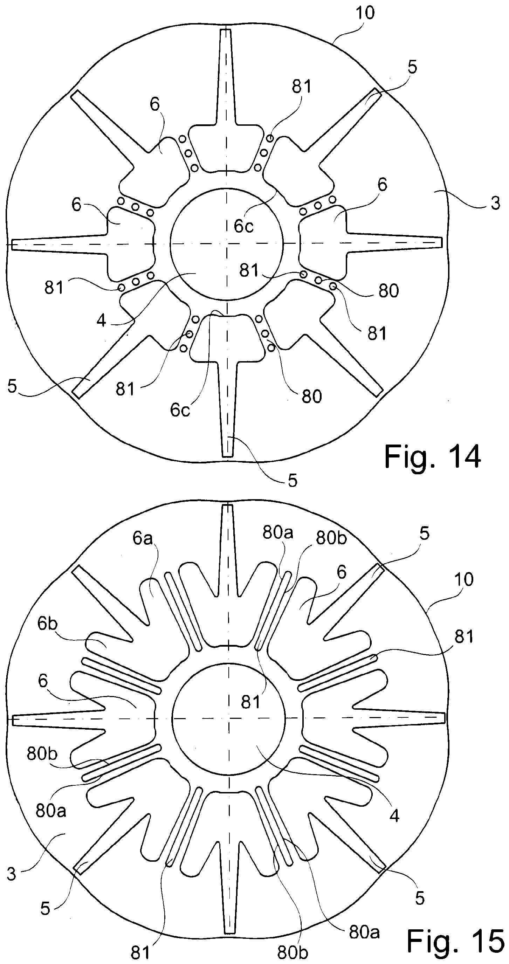

Les figures 14 et 15 illustrent des variantes de réalisation de la tôle rotorique 3 de la figure 2.

L'évidement 6 peut présenter une forme sensiblement trapézoïdale, comme illustré sur la figure 14, et présenter notamment des arrondis dans les coins, ainsi que, le cas échéant, une portion convexe 6c vers l'évidement, sur son bord opposé au logement 5, afin de faciliter le positionnement de l'élément de blocage 12.

En outre, comme illustré sur la figure 14, la tôle rotorique 3 peut comporter au moins une ouverture 81 entre deux évidements 6 adjacents associés à deux logements 5 consécutifs. En particulier, la tôle rotorique 3 peut comporter trois ouvertures 81 disposées de façon alignée radialement entre deux évidements 6 adjacents. La ou les ouvertures 81 peuvent être circulaires. De plus, la ou les ouvertures 81 peuvent être équidistantes les unes des autres et peuvent être situées selon un plan de symétrie des deux évidements 6 adjacents.

Par ailleurs, comme illustré sur la figure 15, le pont de matière 80 s'étendant entre deux évidements 6 adjacents peut être remplacé par plusieurs ponts de matière parallèles. En particulier, la tôle rotorique 3 peut comporter au moins deux ponts de matière 80a et 80b entre deux évidements 6 adjacents, ces ponts de matière 80a et 80b étant situés de part et d'autre d'une ouverture 81. L'ouverture 81 s'étend longitudinalement et radialement entre les évidements 6 adjacents, notamment à égale distance de ceux-ci. L'ouverture 81 peut présenter une dimension radiale sensiblement égale à la dimension radiale de l'évidement 6, notamment d'une branche 6a ou 6b de l'évidement 6, comme illustré.

La présence d'ouvertures multiples 81 entre les évidements adjacents 6 dans le mode de réalisation de la figure 14 peut permettre d'obtenir une résistance mécanique plus élevée tout en conservant un faible niveau de fuites magnétiques.

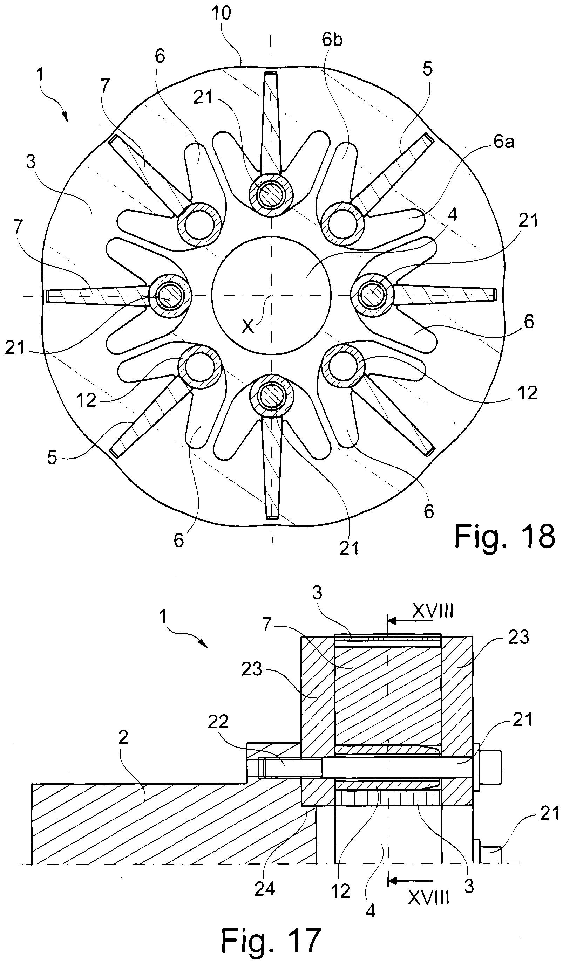

Les figures 16 à 18 illustrent la possibilité d'avoir un rotor 1 muni d'un arbre 2 non traversant. En particulier, la carcasse rotorique est fixée en porte-à-faux à l'arbre 2 sans que celui-ci ne traverse l'ouverture centrale 4. Pour ce faire, le rotor 1 comporte par exemple des éléments de blocage 12 creux. Des vis de serrage 21 (encore appelées tirants) sont insérés dans au moins une partie des éléments de blocage 12 et sont fixées sur une collerette 22 en bout d'arbre, étant par exemple vissées directement dans cette collerette 22, comme on peut le voir sur les figures 16 et 17. Le rotor 1 peut par exemple comporter quatre vis de serrage 21 réparties de façon symétrique sur la carcasse rotorique.

La carcasse rotorique est ainsi rendue solidaire de l'arbre 2 sans pour autant que l'arbre 2 ne traverse l'ouverture centrale 4. Le rotor 1 peut comporter, comme illustré, deux flasques 23. Les vis de serrage 21 prennent appui par leur tête contre l'un des flasques 23. L'autre flasque s'interpose entre l'arbre 2 et le paquet de tôles. Un épaulement 24 sur l'arbre peut assurer le centrage du flasque 23.

L'élasticité du calage lors du placement de l'élément de blocage 12 peut être assurée par la forme et/ou la matière de celui-ci.

Le rotor 1 représenté à la figure 19 comporte une carcasse magnétique 3 s'étendant axialement selon l'axe de rotation X du rotor, cette carcasse étant de préférence formée par un paquet de tôles empilées selon l'axe X, les tôles étant dans l'exemple considéré identiques et superposées exactement. Chacune des tôles est monobloc.

Le rotor 1 comporte une pluralité d'aimants permanents 7 disposés dans des logements correspondants 5 de la carcasse magnétique rotorique 3, de manière à ce que deux aimants consécutifs 7 présentent des mêmes polarités sur leurs faces en regard. Les aimants permanents 7 sont dans l'exemple décrit de forme générale rectangulaire en section transversale, et sont relativement large par rapport à l'écart entre deux aimants consécutifs. Ainsi, le rotor comporte des ponts de matière dans la tôle magnétique assez étroits entre deux logements consécutifs de deux aimants consécutifs. On a ainsi une masse d'aimants importante par rapport à la masse de tôle, ce qui peut être particulièrement utile dans le cas où la puissance massique des aimants est relativement faible, si ces derniers sont réalisés par exemple en ferrites.

La carcasse rotorique 3 est montée sur un support 2 qui peut être un arbre réalisé dans un matériau magnétique, par exemple de l'acier. Dans l'exemple considéré, le support 2 appartient à une machine 30 de fabrication du rotor, comme illustré aux figures 20 et 21. La carcasse rotorique 3 comporte une ouverture centrale 4 pour le montage sur le support 2. L'ouverture centrale 4 comporte une saillie 11 d'anti-rotation, engagée dans une rainure correspondante du support.

Le rotor 1 peut être disposé à l'intérieur d'un stator non représenté, qui comporte un bobinage qui peut être de tout type, par exemple un bobinage concentré ou réparti. Ce stator permet de générer un champ magnétique tournant d'entraînement du rotor, dans le cas d'un moteur synchrone, et dans le cas d'un alternateur, la rotation du rotor induit une force électromotrice dans les bobinages du stator.

Les logements 5 sont séparés de la périphérie de la tôle rotorique par un pont de matière 50 formé avec la tôle, d'une largeur comprise par exemple entre 0,1 et 3 mm, conférant aux logements 5 une résistance mécanique suffisante.

Chaque logement 5 présente, comme illustré à la figure 4, une dimension radiale / supérieure à celle de l'aimant correspondant.

Conformément à l'invention, chaque logement 5 débouche sur un évidement 6, s'étendant de part et d'autre du plan médian M du logement 5, pour limiter les pertes de flux magnétique par bouclage à travers le moyeu du rotor. Dans l'exemple décrit, ces logements 5 ne s'étendent pas circonférentiellement au delà de la largeur des aimants permanents 7, contrairement aux modes de réalisation précédemment décrits.

La largeur *j* du pont de matière 80 s'étendant entre deux évidements 6 adjacents est par exemple comprise entre 0,5 et 15 mm, par exemple d'environ 1,4 mm dans l'exemple considéré. Le pont de matière 80 est à saturation du flux magnétique, ce qui limite le passage du flux magnétique à travers lui.

Le rotor 1 comporte des éléments de blocage 12 contribuant au maintien des aimants 7 dans les logements 5. Dans l'exemple décrit, les éléments de blocage 12 sont pleins, en étant de section transversale circulaire. En variante, ils peuvent être de forme tubulaire creuse et non fendus.

La machine 30 permet l'immobilisation des tôles rotoriques et des aimants pendant l'insertion des éléments de blocage 12 dans les évidements 6, grâce à des tirants 31 et des vis 32 illustrées aux figures 22 et 23.

Les aimants permanents peuvent être imprégnés ou enrobés dans la mesure où les matériaux qui les composent, par exemple des ferrites, peuvent être fragiles et sensibles aux vibrations.

Les éléments de blocage 12 sont par exemple réalisés en une matière thermoplastique élastiquement déformable.

Les éléments de blocage 12 permettent de maintenir les aimants permanents 7 en appui contre des épaulements 55 ménagés dans les logements 5 à l'extrémité des aimants 7 la plus proche de l'entrefer.

Le jeu négatif radial R entre un aimant 7 et l'élément de blocage 12 correspondant est par exemple en valeur absolue supérieur ou égal à 0, étant fonction du diamètre du rotor, de l'échauffement, de la vitesse ou de tout autre contrainte appliquée au rotor.

Bien entendu, l'invention n'est pas limitée à l'exemple de réalisation qui vient d'être décrit. Chaque élément de blocage 12 peut avoir une forme autre.

L'élément de blocage 12 peut par exemple avoir, en section, une forme sensiblement en sablier (ou noeud papillon). L'élément de blocage 12 peut être creux, comme illustré, ou plein. L'élément de blocage 12 peut ou non être pourvu à une extrémité d'un rétrécissement d'introduction 12b, comme représenté sur la figure 28. Ce rétrécissement peut s'étendre sur une longueur / d'environ 10% de la totalité de la longueur L de l'élément de blocage 12.

En section transversale, l'élément de blocage 12 peut comporter, comme illustré sur la figure 26b, deux parois plus épaisses 12d et deux parois plus minces 12c qui relient les parois 12d et sont incurvées l'une vers l'autre de façon à définir un rétrécissement 12e de section à mi-hauteur environ. De par sa forme, l'élément de blocage 12 peut se déformer élastiquement avec rapprochement des parois 12d, les parois minces 12c définissant des lignes de pliage préférentielles.

Dans les exemples qui viennent d'être décrits, les éléments de blocage sont d'un seul tenant. On ne sort pas du cadre de la présente invention s'il en est autrement, et si les éléments de blocage sont par exemple réalisés en deux parties, comme illustré à titre d'exemple respectivement aux figures 31 à 39 et 40 à 48.

Dans l'exemple de réalisation des figures 31 à 39, l'élément de blocage 12 est formé de deux parties 12' et 12" qui sont de forme identique, étant placées tête-bêche pour constituer l'élément de blocage 12. Une constitution en deux parties peut être particulièrement utile dans le cas de machines de taille relativement importante, et pour lesquelles il peut être intéressant de disposer d'un jeu assez important dans la mise en place de l'élément de blocage.

Chacune des parties 12', 12" comporte une face 40 inclinée par rapport à l'axe longitudinal de la machine d'un angle d'environ 2°, et dentelée, formant des languettes 41 qui sont dans l'exemple décrit au nombre de 21.

Les languettes 41 sont destinées à coopérer entre elles comme illustré à la figure 36 pour retenir les deux parties 12' et 12" en position, de manière à ce que l'élément de blocage ait une longueur totale T minimum et une hauteur H maximum, pour jouer son rôle et bloquer l'aimant correspondant en position. Les languettes 41 sont inclinées d'un angle γ d'environ 20° par rapport à l'axe longitudinale de la machine.

Dans l'exemple de réalisation des figures 40 à 48, l'élément de blocage 12 est formé d'une partie 12' identique à la précédente et d'une partie 12" de forme différente. Cette partie 12" diffère de la précédente non par sa face inclinée 40 comportant les languettes 41, qui reste semblable et coopère de la même manière que décrit précédemment avec la partie correspondante 12', mais par la forme de sa face opposée 42. Cette face opposée 42 est dans cette variante de forme plane.

La partie 12" diffère également de la précédente par sa longueur L, qui est inférieure à celle de la partie 12'.

Elle pourrait encore dans une variante être d'une forme autre, par exemple partiellement cylindrique, comme illustré à titre d'exemple aux figures 49 à 51.

Ce mode de réalisation diffère également des précédents par la valeur de l'angle γ, qui est dans cet exemple de 10° environ.

L'expression « comportant un » doit être comprise comme étant synonyme de « comportant au moins un ».

## Revendications

1. Rotor (1) de machine électrique tournante à aimants permanents (7) et à concentration de flux, comportant une carcasse rotorique (3) formées par un assemblage de tôles rotoriques, chacune étant monobloc, et présentant des logements (5) orientés radialement dans lesquels les aimants permanents (7) sont disposés, chaque logement (5) ne débouchant pas sur l'extérieur de la tôle rotorique et chaque logement (5) débouchant à son extrémité radialement intérieure sur un évidement (6) s'étendant de part et d'autre d'un plan médian (M) du logement (5), **caractérisé par le fait que** le rotor comporte un élément de blocage (12) inséré entre le fond de l'évidement (6) et l'aimant permanent (7) disposé dans le logement (5), les aimants permanents (7) ayant en section une forme trapézoïdale.

2. Rotor (1) selon la revendication 1, comportant un support rotatif (2), notamment un arbre (2) s'étendant selon l'axe (X) de rotation du rotor (1), réalisé de préférence dans un matériau magnétique.

3. Rotor (1) selon l'une des revendications précédentes, chaque évidement (6) présentant deux branches (6a, 6b) qui s'étendent respectivement de part et d'autre du logement (5), notamment en divergeant en éloignement de l'axe (X) du rotor (1).

4. Rotor (1) selon l'une quelconque des revendications précédentes, les évidements (6) adjacents associés à deux logements (5) consécutifs étant séparés par au moins un pont de matière (80, 80a, 80b).

5. Rotor selon l'une quelconque des revendications précédentes, les évidements (6) ayant une dimension radiale, le long du plan médian (M) du logement (5), inférieure ou égale à celle du logement (5).

6. Rotor (1) selon l'une quelconque des revendications précédentes, l'élément de blocage (12) étant élastiquement déformable, étant de préférence réalisé dans une matière thermoplastique.

7. Rotor (1) selon l'une quelconque des revendications précédentes, le jeu négatif (R) entre l'aimant (7) et l'élément de blocage (12) étant supérieur ou égal en valeur absolue à 0.

8. Rotor (1) selon l'une quelconque des revendications précédentes, l'évidement (6) comportant des branches (6a, 6b) ayant des bords (56) se rejoignant et étant pourvu de préférence d'une encoche (58), notamment circulaire, de positionnement de l'élément de blocage (12).

9. Rotor (1) selon l'une quelconque des revendications 1 à 8, l'élément de blocage (12) se présentant sous la forme d'une goupille cylindrique (12a) pourvue à une extrémité d'un cône d'introduction (12b).

10. Rotor (1) selon l'une quelconque des revendications 1 à 9, les éléments de blocage (12) ayant chacun, en section transversale, une forme en sablier.

11. Rotor selon l'une quelconque des revendications 1 à 8, l'élément de blocage étant formé par l'assemblage d'au moins deux pièces, notamment chacune en forme de cône, disposées tête-bêche et munies sur leur faces en contact de reliefs d'accrochage, notamment de crans, de telle sorte que le déplacement d'une pièce par rapport à l'autre soit unidirectionnel, dans une direction conduisant à une augmentation du serrage.

12. Rotor (1) selon l'une quelconque des revendications précédentes, au moins une ouverture (81) étant formée entre deux évidements (6) adjacents associés à deux logements (5) consécutifs, notamment plusieurs ouvertures circulaires (81) espacées dans la direction radiale et située chacune entre les deux évidements (6), ou l'ouverture (81) définissant notamment au moins deux ponts de matière (80a, 80b) entre les évidements (6) adjacents, situés de part et d'autre de l'ouverture (81), l'ouverture (81) ayant de préférence une forme allongée radialement.

13. Procédé de fabrication d'un rotor (1) selon l'une quelconque des revendications précédentes, les aimants permanents (7) étant mis en place avec jeu dans les logements (5) correspondants et les éléments de blocage (12) étant insérés à force dans les évidements (6), s'interposant entre les aimants permanents (7) et le bord (56) des évidements (6), de façon à maintenir sans jeu les aimants permanents (7) dans les logements (5).

14. Machine tournante électrique comportant un rotor (1) tel que défini dans l'une quelconque des revendications 1 à 12.

## Patentansprüche

1. Rotor (1) einer elektrischen Rotormaschine mit Permanentmagneten und Konzentration des Flusses, mit einem Läufergehäuse (3), das durch eine Anordnung aus jeweils in einem Stück ausgebildeten Läuferblechen gebildet wird und radial gerichtete Aufnahmen (5) aufweist, in welchen die Permanentmagnete (7) angeordnet sind, wobei keine der Aufnahmen (5) zur Außenseite des Läuferbleches hin offen ist und jede Aufnahme (5) an ihrem radial inneren Ende in einer Ausnehmung (6) mündet, die sich beiderseits einer Medianebene (M) der Aufnahme (5) erstreckt, **dadurch gekennzeichnet, dass** der Rotor ein Blockierelement (12) aufweist, das zwischen dem Grund der Ausnehmung (6) und dem in der Aufnahme (5) aufgenommenen Permanentmagneten (7) eingefügt ist, wobei die Permanentmagnete (7) einen trapezförmigen Querschnitt haben.

2. Rotor nach Anspruch 1, der einen Läuferträger (2), insbesondere eine Welle (2) aufweist, die sich längs der Drehachse (X) des Rotors (1) erstreckt, vorzugsweise hergestellt aus einem magnetischen Material.

3. Rotor (1) nach einem der vorstehenden Ansprüche, bei dem jede Ausnehmung (6) zwei Arme (6a, 6b) bildet, die sich jeweils auf einer Seite der Ausnehmung (5) erstrecken und insbesondere mit zunehmendem Abstand von der Achse (X) des Rotors (1) divergieren.

4. Rotor (1) nach einem der vorstehenden Ansprüche, bei dem die einander benachbarten Ausnehmungen (6), die zu zwei aufeinanderfolgenden Aufnahmen (5) gehören, durch wenigstens eine Materialbrücke (80, 80a, 80b) getrennt sind.

5. Rotor nach einem der vorstehenden Ansprüche, bei dem die Ausnehmungen (6) längs der Medianebene (M) der Aufnahme (5) eine Abmessung haben, die kleiner oder gleich derjenigen der Aufnahme (5) ist.

6. Rotor (1) nach einem der vorstehenden Ansprüche, bei dem das Blockierelement (12) elastisch verformbar und vorzugsweise aus einem thermoplastischen Material gebildet ist.

7. Rotor (1) nach einem der vorstehenden Ansprüche, bei dem das negative Spiel (R) zwischen dem Magneten (7) und dem Blockierelement (12) größer oder gleich einem Absolutwert von 0 ist.

8. Rotor (1) nach einem der vorstehenden Ansprüche, bei dem die Ausnehmung (6) Arme (6a, 6b) aufweist, die Ränder (56) haben, die sich vereinigen und vorzugsweise mit einer Kerbe (58), insbesondere einer kreisförmigen Kerbe zur Positionierung des Blockierelements (12) versehen sind.

9. Rotor (1) nach einem der Ansprüche 1 bis 8, bei dem das Blockierelement (12) die Form eines zylindrischen Stiftes (12a) hat, der an einem Ende mit einem Einlaufkonus (12b) versehen ist.

10. Rotor (1) nach einem der Ansprüche 1 bis 9, bei dem die Blockierelemente jeweils im Querschnitt die Form einer Eieruhr haben.

11. Rotor (1) nach einem der Ansprüche 1 bis 8, bei dem das Blockierelement durch eine Baugruppe aus mindestens zwei Teilen gebildet wird, insbesondere jeweils mit konischer Form, die entgegengesetzt angeordnet und an den Berührungsflächen mit Verankerungsreliefs, insbesondere Rasten versehen sind, derart, dass die Bewegung eines Teils in Bezug auf das andere undirektional ist, in einer Richtung, die zu einer Verstärkung der Verspannung führt.

12. Rotor (1) nach einem der vorstehenden Ansprüche, bei dem zwischen zwei benachbarten Ausnehmungen (6), die zu zwei aufeinanderfolgenden Aufnahmen (5) gehören, wenigstens eine Öffnung (81) gebildet ist, insbesondere mehrere kreisförmige Öffnungen (81), die in der radialen Richtung zueinander beabstandet sind und jeweils zwischen den beiden Ausnehmungen (6) liegen oder die Öffnung (81) insbesondere wenigstens zwei Materialbrücken (80a, 80b) zwischen den benachbarten Ausnehmungen (6) bildet, welche Materialbrücken beiderseits der Öffnung (81) angeordnet sind, wobei die Öffnung (81) vorzugsweise eine in Radialrichtung längliche Form hat.

13. Verfahren zur Herstellung eines Rotors (1) nach einem der vorstehenden Ansprüche, bei dem die Permanentmagnete (7) mit Spiel in die entsprechenden Aufnahmen (5) eingesetzt werden und die Blockierelemente (12) unter Spannung in die Ausnehmungen (6) eingeführt werden, so dass sie derart zwischen den Permanentmagneten (7) und dem Rand (56) der Ausnehmungen (6) liegen, dass sie die Permanentmagnete (7) spielfrei in den Ausnehmungen (5) halten.

14. Elektrische Maschine mit einem Rotor (1) nach einem der Ansprüche 1 bis 12.

## Claims

1. A rotor (1) for a rotary electric machine which is a flux-concentration permanent magnet (7) rotor, comprising a rotor frame (3) formed of a collection of rotor laminations, each one being of one piece, and having radially oriented housings (5) in which the permanent magnets (7) are placed, each housing (5) not opening onto the outside of the rotor lamination and each housing (5) opening at its radially inner end onto a recess (6) extending on either side of a mid-plane (M) of the housing (5), **characterized by** the fact that the rotor comprises a locking element (12) inserted between the closed end of the recess (6) and the permanent magnet (7) placed in the housing (5), the permanent magnets (7) being trapezoidal in cross section.

2. The rotor (1) as claimed in claim 1, comprising a rotary support (2), in particular a shaft (2) extending along the axis (X) of rotation of the rotor (1), and preferably made of a magnetic material.

3. The rotor (1) as claimed in one of the preceding claims, each recess (6) having two branches (6a, 6b) which respectively extend one on each side of the housing (5), in particular diverging with increasing distance away from the axis (X) of the rotor (1).

4. The rotor (1) as claimed in any one of the preceding claims, the adjacent recesses (6) associated with two consecutive housings (5) being separated by at least one bridge of material (80, 80a, 80b).

5. The rotor (1) as claimed in any one of the preceding claims, the recesses (6) having a radial dimension, along the mid-plane (M) of the housing (5), that is less than or equal to that of the housing (5).

6. The rotor (1) as claimed in any one of the preceding claims, the locking element (12) being elastically deformable, preferably being made of a thermoplastic material.

7. The rotor (1) as claimed in any one of the preceding claims, the negative clearance (R) between the magnet (7) and the locking element (12) being, in absolute terms, greater than or equal to 0.

8. The rotor (1) as claimed in any one of the preceding claims, the recess (6) having branches (6a, 6b) with edges (56) that meet, preferably being provided with a notch (58), notably a circular notch, for positioning the locking element (12).

9. The rotor (1) as claimed in any one of claims 1 to 8, the locking element (12) being in the form of a cylindrical pin (12a) provided at one end with an insertion taper (12b).

10. The rotor (1) as claimed in any one of claims 1 to 9, the locking elements (12) each being of hour-glass cross section.

11. The rotor as claimed in any one of claims 1 to 8, the locking element being formed by assembling at least two components, each notably in the form of a cone, positioned head to toe and equipped on their contact faces with catching reliefs, notably teeth, so that the movement of one component relative to the other is a one-way movement, in a direction that increases the clamping effect.

12. The rotor (1) as claimed in any one of the preceding claims, at least one opening (81) being formed between two adjacent recesses (6) associated with two consecutive housings (5), there notably being several circular openings (81) spaced apart in the radial direction and each situated between the two recesses (6), or the opening (81) defining at least two bridges of material (80a, 80b) between the adjacent recesses (6), situated one on each side of the opening (81), the opening (81) preferably being of radially elongate shape.

13. A method of manufacturing a rotor (1) according to any one of the preceding claims, the permanent magnets (7) being fitted with clearance into the corresponding housings (5) and the locking elements (12) being forcibly inserted into the recesses (6), becoming interpolated between the permanent magnets (7) and the edge (56) of the recesses (6) so as to hold the permanent magnets (7) without clearance in the housings (5).

14. A rotary electric machine comprising a rotor (1) as defined in any one of claims 1 to 12.
